# EUROPEAN PATENT APPLICATION

(11) **EP 4 279 271 A1**
(43) Date of publication of application: **22.11.2023**
(21) Application number: 22739438.4
(22) Date of filing: 13.01.2022
(51) Int. Cl.: B32B 27/32, B65D 30/02, B65D 30/16

(54) **LAMINATE AND PACKAGE BODY**

(30) Priority: 14.01.2021 JP 2021004162
(71) Applicant: Fujimori Kogyo Co., Ltd., Tokyo 112-0002 (JP)
(72) Inventor: KUWABARA Hiroshi, Tokyo 112-0002 (JP); NAMIKI Mariko, Tokyo 112-0002 (JP)
(74) Representative: Lavoix
(86) International application number: PCT/JP2022/000827
(87) International publication number: WO 2022/154033

(57) **Abstract**

A laminated body includes an innermost sealant layer (12a) formed of a polyethylene-based resin, a base material layer (12b) formed of a polyethylene-based resin, and an outermost heat-resistant layer (12c) formed on an outer surface of the base material layer (12b). A package body (10) includes a folding member (12). At least the folding member (12) of the package body (10) is formed of the laminated body.

## Description

### [Technical Field]

The present invention relates to a laminated body and a package body.

Priority is claimed on Japanese Patent Application No. 2021-4162 filed on January 14, 2021, the content of which is incorporated herein by reference.

### [Background Art]

Paragraph 0009 of Patent Literature 1 describes a standing pouch having a self-standing property in which a bottom portion film folded in half is disposed between a pair of barrel portion films. Also, Paragraph 0012 of Patent Literature 2 describes a gusset bag in which a pair of side sheets each having a central fold line formed inward are disposed between a front sheet and a rear sheet such that it can be flattened when the side sheet is folded and inflated into a substantially rectangular parallelepiped shape when the side sheet is unfolded.

### [Citation List]

### [Patent Literature]

[Patent Literature 1] Japanese Unexamined Patent Application, First Publication No. 2006-7630
[Patent Literature 2] Japanese Unexamined Patent Application, First Publication No. 2006-341876

### [Summary of Invention]

### [Technical Problem]

In conventional package bodies, a composite film used for a barrel member and a bottom member is laminated with a heat-adhesive resin (sealant) layer such as polyethylene (PE) on an inner surface, and a base material such as polyethylene terephthalate (PET) having a higher heat resistance than the sealant on an outer surface. When the barrel members are thermally adhered or the barrel member and the bottom member are thermally adhered, the sealant is melted to join inner surfaces of the composite films together. However, in a package body containing different types of resins, there is a problem in that recycling it as plastic container packaging is difficult.

In recent years, mono-material container packaging using a single resin has been proposed to facilitate recycling. However, if a package body is formed of a film using a single resin, when inner surfaces of the film are joined (sealed) together, adhesion (blocking) may also occur in a portion in which outer surfaces of the film overlap each other. If the blocking occurs, it may be difficult to open the overlapped films when filling the package body with contents. If the films are joined at a lower processing temperature to curb blocking, it takes time for the processing and there is a problem in that productivity decreases.

The present invention has been made in view of the above circumstances, and an objective of the present invention is to provide a laminated body in which joining (sealing) of inner surfaces is facilitated and adhesion (blocking) of outer surfaces is suppressed, and a package body using the same.

### [Solution to Problem]

In order to solve the above problems, the present invention provides a laminated body which includes an innermost sealant layer formed of a polyethylene-based resin, a base material layer formed of a polyethylene-based resin, and an outermost heat-resistant layer formed on an outer surface of the base material layer.

The heat-resistant layer may be formed of a varnish.

The sealant layer may be formed of an unstretched polyethylene-based resin, and the base material layer may be formed of a stretched polyethylene-based resin.

A printed layer or an adhesive layer may be provided between the sealant layer and the base material layer.

95% by weight or more of the laminated body may be formed of a polyethylene-based resin.

Also, the present invention also provides a package body including a folding member folded such that outer surfaces thereof face each other along a fold line, in which at least the folding member is formed of the above-described laminated body.

One or more of the folding members may be provided between a pair of flat planar members.

The planar members may be laminated bodies, each including an innermost sealant layer formed of a polyethylene-based resin and an outermost base material layer formed of a polyethylene-based resin.

In the package body having a bottom member folded in half along a fold line, the bottom member may be sandwiched between a pair of barrel members, the bottom member may be the folding member, and the barrel members may be the planar members.

A heat-resistant layer may be locally formed in a region of an outer surface of the folding member corresponding to a portion to which an inner surface of the folding member is joined.

The heat-resistant layer may be omitted and the base material layers may be joined together at an end portion of the folding member in a direction along the fold line.

### [Advantageous Effects of Invention]

According to the present invention, since the heat-resistant layer is provided on an outer surface of the laminated body having the sealant layer on an inner surface, joining (sealing) of the inner surfaces can be facilitated and adhesion (blocking) of the outer surfaces can be suppressed.

### [Brief Description of Drawings]

FIG. 1 is a front view showing a package body according to a first embodiment.
FIG. 2 is a cross-sectional view taken along line II-II of FIG. 1.
FIG. 3 is a front view showing a package body according to a second embodiment.
FIG. 4 is a cross-sectional view taken along line IV-IV of FIG. 3.
FIG. 5 is a schematic cross-sectional view showing a laminated body of an embodiment.

### [Description of Embodiments]

Hereinafter, the present invention will be described on the basis of preferred embodiments with reference to the drawings.

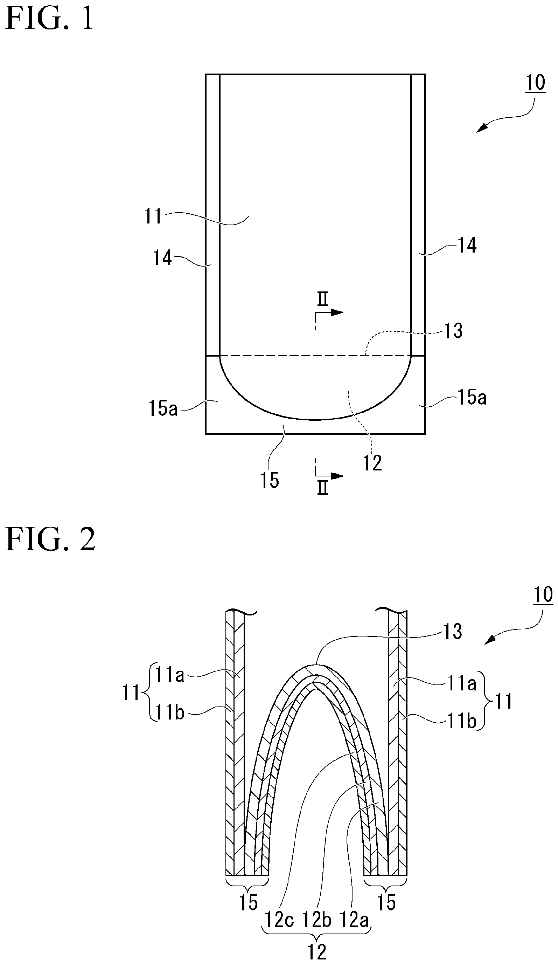

FIG. 1 shows an external appearance of a package body 10 of a first embodiment. Also, FIG. 2 is a cross-sectional view taken along line II-II of FIG. 1. The front and rear sides of the package body 10 correspond to a direction perpendicular to the paper surface in FIG. 1. The front and rear sides of the package body 10 correspond to a left-right direction in FIG. 2. The package body 10 is formed of a pair of planar members 11 and a folding member 12 folded in half along a fold line 13. The planar members 11 form a barrel member of the package body 10. The folding member 12 forms a bottom member of the package body 10. The folding member 12 is folded by the fold line 13 such that outer surfaces thereof face each other.

The planar members 11 are each disposed in the front and rear of the package body 10. The planar members 11 on the front and rear of the package body 10 may be formed to have the same planar shape as each other. Barrel seal portions 14 are formed at the left and right of the package body 10 above the fold line 13. In the barrel seal portions 14, inner surfaces of the front and rear planar members 11 are joined together along the left and right circumferential edge portions of the package body 10.

The folding member 12 is sandwiched between the front and rear planar members 11 with the fold line 13 on an upper side. In a plan view shown in FIG. 1, the fold line 13 is an upper end of the folding member 12. Below the fold line 13, a bottom seal portion 15 in which an inner surface of the folding member 12 is joined to an inner surface of the planar member 11 is formed. As shown in FIG. 2, the bottom seal portion 15 joins each portion of the folding member 12 defined by the fold line 13 to the planar member 11 on the same side.

An unsealed portion of the package body 10 surrounded by the barrel seal portions 14 and the bottom seal portions 15 forms a storage space for contents inside the package body 10. If the folding member 12 is unfolded forward and rearward, the package body 10 can stand on its own with the folding member 12 on a lower side in a vertical direction. Inner surfaces of the planar member 11 and the folding member 12 are surfaces on a side in contact with the storage space for the contents. Outer surfaces of the planar member 11 and the folding member 12 are surfaces on a side opposite to the inner surfaces.

The planar members 11 are each formed of a laminated body including a sealant layer 11a formed of a polyethylene-based resin, and a base material layer 11b formed of a polyethylene-based resin. The sealant layer 11a is an innermost layer disposed on the inner surface of the planar member 11. The base material layer 11b may be an outermost layer of the planar member 11.

The folding member 12 is formed of a laminated body including a sealant layer 12a formed of a polyethylene-based resin, a base material layer 12b formed of a polyethylene-based resin, and a heat-resistant layer 12c formed on an outer surface of the base material layer 12b. The sealant layer 12a is an innermost layer disposed on an inner surface of the folding member 12. The heat-resistant layer 12c is an outermost layer disposed on an outer surface of the folding member 12.

The sealant layers 11a and 12a are disposed as innermost layers on inner surfaces of the laminated body forming the planar member 11 or the folding member 12. The sealant layer 11a of the planar member 11 can be used for joining the planar members 11 together and for joining the planar member 11 and the folding member 12 together. The sealant layer 12a of the folding member 12 can be used for joining the planar member 11 and the folding member 12 together.

The sealant layers 11a and 12a are preferably formed of an unstretched polyethylene-based resin. As a specific example of a material forming the sealant layers 11a and 12a, a polyethylene-based resin with a relatively low density such as, for example, linear low-density polyethylene (LLDPE) and low-density polyethylene (LDPE) can be mentioned. The material forming the sealant layers 11a and 12a may be one type of a polyethylene-based resin or may be a blend of two or more types of a polyethylene-based resin. Thicknesses of the sealant layers 11a and 12a are not particularly limited, and may be, for example, approximately 60 to 180 µm.

The base material layers 11b and 12b are laminated on an outer side of the sealant layers 11a and 12a in a thickness direction in the laminated body forming the planar member 11 or the folding member 12. It is preferable that the base material layers 11b and 12b can reinforce a mechanical strength of the laminated body when the laminated body is used by being conveyed in a length direction, or the like. In a conventional laminated film, a PET film or the like has been used as a base material layer, but in the laminated body of the embodiment, the polyethylene-based resin film is used as the base material layers 11b and 12b, and therefore recyclability is improved.

The base material layers 11b and 12b are preferably formed of a stretched polyethylene-based resin. As a specific example of a material forming the base material layer 11b and 12b, a polyethylene-based resin with a relatively high density such as, for example, medium-density polyethylene (MDPE) and high-density polyethylene (HDPE) can be mentioned. The material forming the base material layers 11b and 12b may be one type of a polyethylene-based resin or may be a blend of two or more types of a polyethylene-based resin. Thicknesses of the base material layers 11b and 12b are not particularly limited, and may be, for example, approximately 10 to 50 µm.

The above-described polyethylene-based resin used for the sealant layers 1 1a and 12a or the base material layers 11b and 12b may be an ethylene homopolymer or a copolymer mainly composed of ethylene. As a monomer (comonomer) other than ethylene, one or more of α-olefins such as 1-butene, 1-hexene, and 1-octene, cyclic olefins such as norbornene, vinyl-based monomers such as vinyl acetate, vinyl chloride, and acrylic acid, and the like can be mentioned. When the polyethylene-based resin is copolymerized with a monomer having an ester group such as vinyl acetate, a part of the ester group may be saponified to form a copolymer containing vinyl alcohol.

A proportion of ethylene in constituent monomers of the polyethylene-based resin is preferably 50% by weight or more, and may be, for example, 80 to 100% by weight. The ethylene or the comonomer may be a compound derived from fossil resources such as petroleum, or may be a compound derived from biomass such as plants. A resin contained in the sealant layers 11a and 12a or the base material layers 11b and 12b may be only a polyethylene-based resin. The sealant layers 11a and 12a or the base material layers 11b and 12b may contain an additive besides the resin. The additive is not particularly limited, and examples thereof include an antioxidant, a lubricant, an anti-blocking agent, a flame retardant, an ultraviolet absorber, a light stabilizer, an antistatic agent, a colorant, and a cross-linking agent.

At least a part of the polyethylene-based resin may include a recycled polyethylene-based resin. The recycled polyethylene-based resin may be a polyethylene-based resin obtained by chemical recycling in which a used polyethylene-based resin is decomposed into a monomer such as ethylene and then polymerized again. A polyethylene-based resin obtained by mechanical recycling in which a used polyethylene-based resin is recycled as a polymer through processes such as pulverization and sorting may also be used. A mixture of a recycled polyethylene-based resin and a new polyethylene-based resin may also be used.

A proportion occupied by a thickness of each of the sealant layer 11a and 12a with respect to a thickness of the laminated body is preferably 50% or more, and may be approximately 60%, 70%, 80%, 90%, 95%, or an intermediate value of these. A proportion occupied by a total thickness of the sealant layer 11a and 12a and the base material layer 11b and 12b with respect to the thickness of the laminated body is preferably 50% or more, and may be approximately 60%, 70%, 80%, 90%, 95%, 99%, or an intermediate value of these.

The heat-resistant layer 12c need only be a layer which is superior in heat resistance to the polyethylene-based resin that forms the base material layer 12b. The heat-resistant layer 12c is formed at least on the outer surface of the folding member 12. Thereby, when the inner surface of the folding member 12 is joined (sealed) to the planar member 11, adhesion (blocking) of the outer surfaces of the folding member 12 can be suppressed even if the folding members 12 overlap each other.

The heat-resistant layer 12c may be formed of an inorganic compound such as alumina and silica, or an organic compound containing a metal by vapor deposition, coating, or the like. For example, it is also possible to synthesize a material of the heat-resistant layer 12c on the base material layer 12b from a paint serving as a raw material of the heat-resistant layer 12c by a sol-gel method or the like. As a material for the sol-gel method, metal alkoxides or the like can be mentioned. It is preferable that the material of the heat-resistant layer 12c can be cured at a relatively low temperature such as room temperature using a catalyst or moisture in the air to correspond to a heat resistance of the polyethylene-based resin.

The heat-resistant layer 12c may be formed of a varnish. A heat-resistant varnish capable of forming the heat-resistant layer 12c by drying, curing, or the like is preferable. The varnish may contain a resin and a solvent, or may contain a solventless resin. The resin used for the varnish is not particularly limited, and examples thereof may include one or more of a urethane resin, an acrylic resin, an epoxy resin, a polymethylpentene resin, a cyclic olefin-based resin, an unsaturated polyester resin, an alkyd resin, a polyimide resin, a polyamide-imide resin, a polyamide resin, and the like. The solvent for the varnish can be appropriately selected in consideration of the performance or the like when it is applied to the polyethylene-based resin.

The heat-resistant layer 12c can be directly formed without an adhesive layer or the like interposed between itself and the base material layer 12b. The heat-resistant layer 12c may be formed on the entire surface of the base material layer 12b. The heat-resistant layer 12c may be formed on a partial region on the base material layer 12b. For example, the heat-resistant layer 12c may be locally formed in a region of the outer surface of the folding member 12 corresponding to the bottom seal portion 15 which is a portion to which the inner surface of the folding member 12 is joined. The base material layer 12b may be exposed on the outer surface of the folding member 12 in a region in which the heat-resistant layer 12c is not formed.

At side end portions 15a on the left and right of the bottom seal portions 15, the folding member 12 preferably does not easily open forward and rearward. Although not particularly shown, a notch part or a through hole may be formed in the folding member 12, and the front and rear planar members 11 may be joined through the notch part or the through hole. Also, the outer surfaces of the folding member 12 may be locally joined (sealed) to each other at the left and right side end portions 15a of the bottom seal portion 15. In this case, the notch part or the through hole in the folding member 12 may be omitted. In a region in which the outer surfaces of the folding member 12 are joined (sealed), the heat-resistant layer 12c may be omitted, and the base material layers 12b may face each other to be joined.

A thickness of the heat-resistant layer 12c is preferably, for example, 10 µm or less. A specific example of the thickness of the heat-resistant layer 12c is not particularly limited, and may be approximately 10 µm, 8 µm, 6 µm, 5 µm , 4 µm, 3 µm, 2 µm, 1 µm, 0.5 µm, 0.2 µm, 0.1 µm, or an intermediate value of these.

The heat-resistant layer 12c may include a marking for controlling conveyance or processing of the laminated body in a bag manufacturing process performed by sandwiching the folding member 12 between the planar members 11. A conveying speed and a position of the laminated body can be detected by detecting the marking with a sensor. The heat-resistant layer 12c may contain an additive such as a colorant, a light absorber, or the like to facilitate optical detection by a sensor. The heat-resistant layer 12c formed as a marking may be formed at a position different from positions of seal portions. Also, a region without the heat-resistant layer 12c locally can be used as a marking. Also, the heat-resistant layer 12c can be formed in a shape representing information or a design such as letters, symbols, or drawing patterns.

In the laminated body forming the planar member 11 or the folding member 12, as a different material layer other than the resin layer, a vapor deposition layer, a printed layer, a coating layer, an adhesive layer, and the like may be laminated in addition to the above-described heat-resistant layer 12c. As the different material, a metal such as aluminum, an inorganic compound such as silica and alumina, and the like can be mentioned. The printed layer, the coating layer, the adhesive layer, or the like may contain a polymer material other than polyethylene as a material of an ink, a paint, an adhesive, or the like. The different material layer such as the printed layer, the adhesive layer, or the like may be disposed between the sealant layers 11a and 12a and the base material layers 11b and 12b of the laminated body. A method of forming the laminated body is not particularly limited, and examples thereof may include dry lamination, extrusion lamination, heat lamination, co-extrusion, coating, and the like. Different methods may be used to laminate each of the layers.

The sealant layers 11a and 12a and the base material layers 11b and 12b may be laminated with an adhesive layer interposed therebetween. The adhesive layer may be formed of an adhesive or an anchor coating agent. The material for forming the adhesive layer is not particularly limited, but examples thereof include urethane-based compounds, epoxy-based compounds, isocyanate-based compounds, polyethyleneimine, and organic titanium compounds such as titanium alkoxide. A thickness of the adhesive layer may be, for example, approximately 0.1 to 10 µm, approximately 1 to 6 µm, and approximately 3 to 4 µm. The adhesive layer may contain a resin, or may be an adhesive layer not containing a resin.

Any of outer surfaces of the sealant layers 1 1a and 12a, inner surfaces of the base material layers 11b and 12b, and outer surfaces of the base material layers 11b and 12b may have a printed layer. The printed layer can be formed by printing ink solidly or in a pattern by a printing method such as gravure printing, letterpress printing, offset printing, screen printing, and inkjet. A thickness of the printed layer is not particularly limited, and may be approximately 0.5 to 10 µm. The printed layer may be formed on the entire surface of the laminated body, or may be formed on a portion within a surface of the laminated body. Two or more printed layers may be overlapped.

An ink for forming the printed layer may contain a coloring material such as a pigment and a dye, and a binder. The binder is not particularly limited, and examples thereof may include polyamide, polyurethane, polyester, polyvinyl chloride, polyvinyl acetate, a vinyl chloride-vinyl acetate copolymer, an acrylic-based polymer, polybutadiene, cyclized rubber, and the like. The ink may contain a solvent such as water, an organic solvent, and a vegetable oil. After printing, the ink can be dried by volatilizing the solvent, curing the ink, or the like. In order to promote drying of the ink, heating, ultraviolet irradiation, or the like may be performed. The printed layer may contain a resin, or may be a printed layer not containing a resin.

In the laminated body of the embodiment, a layer with a small thickness such as the heat-resistant layer 12c, the printed layer, and the adhesive layer may be a layer containing a resin. Layers with a relatively large thickness other than those are preferably only the polyethylene-based resin layer such as the sealant layers 11a and 12a and the base material layers 11b and 12b. A thickness of the layer with a small thickness may be, for example, 10 µm or less or 5 µm or less as a thickness of each layer or a total thickness of the layers. 95% by weight or more of the laminated body of the embodiment may be formed of a polyethylene-based resin.

The laminated body of the embodiment can be formed without laminating other resin films except for using the polyethylene-based resin films for the sealant layers 11a and 12a and the base material layers 11b and 12b. Therefore, there is no need to separate resin films of different types when disposing of them, and recycling is facilitated. Examples of other resin films may include polypropylene-based films, polyester-based films, nylon-based films, and the like, but are not limited thereto.

A manufacturing method of a laminated body including the heat-resistant layer 12c is not particularly limited, and may include steps including, for example, (1) a step of forming a printed layer on an outer surface of the sealant layer 12a or an inner surface of the base material layer 12b, (2) a step of forming a printed layer on an outer surface of the base material layer 12b, (3) a step of forming the heat-resistant layer 12c of an outermost layer on an outer surface of the base material layer 12b, and (4) a step of laminating the sealant layer 12a on an inner surface of the base material layer 12b by interposing an adhesive layer.

Either one or both of steps (1) and (2) may be performed. A sequence of steps (1) to (4) is not particularly limited except that step (1) is performed before step (4) and step (2) is performed before step (3). For example, a sequence between step (1) and step (3) is not limited, and both may be performed in parallel. When steps (2) and (3) are performed, the heat-resistant layer 12c may be applied over the printed layer on the outer surface of the base material layer 12b. A sequence between step (3) and step (4) is not limited, and both may be performed in parallel. Steps (1) and (2) may be omitted when the printed layer is not formed in the laminated body.

Different polyethylene-based resin films are used for the sealant layer 12a and the base material layer 12b. The different material layers such as the heat-resistant layer 12c, the printed layer, and the adhesive layer can be formed by laminating the material on a film by film processing technologies such as coating, vapor deposition, printing, and the like. The resulting laminated body may have five layers of, for example, "sealant layer/adhesive layer/printed layer/base material layer/heat-resistant layer" or "sealant layer/printed layer/adhesive layer/base material layer/heat-resistant layer". The resulting laminated body may be made into a flat sheet shape or wound into a roll shape.

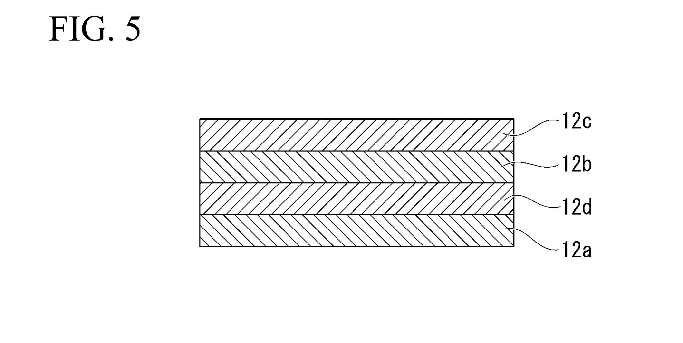

FIG. 5 is a schematic cross-sectional view showing the laminated body of the embodiment. As shown in FIG. 5, the laminated body is laminated in an order of the sealant layer 12a, an intermediate layer 12d, the base material layer 12b, and the heat-resistant layer 12c. The intermediate layer 12d is, for example, a printed layer or an adhesive layer.

Although dimensions of the package body 10 are not particularly limited, for example, in an application of a refill container, a height in the vertical direction may be approximately 100 to 500 mm, a width in a left-right direction may be approximately 70 to 300 mm, and a filling amount may be approximately 100 cm³ to 5000 cm³. As a state of the contents, fluids such as liquids, powders, and granules can be mentioned. Types of the contents are not particularly limited, and examples thereof include detergents, drugs, cosmetics, pharmaceutical products, beverages, seasonings, inks, paints, fuels, and the like.

The package body 10 may include a filling port, a pouring port, and the like. In the example shown in FIG. 1, an opening can be provided between the front and rear planar members 11 at an upper portion of the package body 10, and can be used for filling or pouring the contents. After filling it with the contents, the planar members 11 may be joined together to seal the package body 10. At the time of opening the package body 10, the portion in which the planar members 11 have been joined together may be removed by cutting, tearing or the like. Although not particularly shown, the pouring port may be formed in a shape protruding thinly at an upper portion or a corner of the package body 10.

A method for manufacturing the package body 10 is not particularly limited, and examples thereof include a method having a step of forming the fold line 13 on the folding member 12, a step of sandwiching the folding member 12 between the pair of planar members 11, and a step of joining inner surfaces of the laminated bodies to form the barrel seal portion 14 and the bottom seal portion 15. Original fabrics of the planar member 11 and the folding member 12 may be a long web extending in a direction of the fold line 13. The web may be conveyed in a longitudinal direction. The package body 10 formed on the web can be separated into individual package bodies 10 by cutting in a longitudinal direction, a cross direction (width direction), or other directions.

The original fabrics before the fold line 13 is formed on the folding member 12 may be prepared in advance as a laminated body having the sealant layer 12a, the base material layer 12b, and the heat-resistant layer 12c. When the heat-resistant layer 12c is formed in a predetermined region of the original fabrics, the heat-resistant layer 12c may be formed by determining a required region in advance.

The step of forming the heat-resistant layer 12c may be performed at a stage of processing such as forming the package body 10 as long as it is before the step of joining inner surfaces of the laminated bodies. In this case, the original fabrics of the folding member 12 may be prepared as a laminated body having the sealant layer 12a and the base material layer 12b and not having the heat-resistant layer 12c. Since the heat-resistant layer 12c is formed on outer surfaces of the folding member 12 on a side facing each other due to the fold line 13, the heat-resistant layer 12c is preferably formed before the fold line 13 is formed.

The package body 10 of a first embodiment has a bottom portion formed by sandwiching the folding member 12 on a lower portion of the planar members 11 that face each other in a front-rear direction, but positions, shapes, the number, and the like of the folding members 12 are arbitrary. In the package body having the folding member 12 folded such that the outer surfaces face each other along the fold line 13, at least the folding member 12 need only be formed of the above-described laminated body having the heat-resistant layer 12c on the outer surfaces.

One or more folding members 12 may be provided between the pair of flat planar members 11. The number of the folding members 12 is not particularly limited, and, for example, one, two, three, four, or the like can be mentioned, and may be a larger number. The folding member 12 may be disposed along one side of the planar member 11. The folding member 12 may be disposed along two facing sides or two adjacent sides of the planar member 11. The folding member 12 may be disposed on three or four sides of the substantially rectangular planar member 11. Two or more folding members 12 may be overlapped in a front-rear direction of the planar members 11.

A fold line of the folding member 12 is not limited to the fold line 13 in a long-side direction in the embodiment, and may have a fold line in a short-side direction, an oblique direction, or the like. For example, when the folding member 12 is disposed at three or four sides of the planar member 11, the folding member 12 in a case of joining the front and rear planar members 11 and the left and right folding members 12 may have oblique fold lines at four corners of the rectangle (see paragraphs 0025 to 0026 of Patent Literature 2). When inner surfaces of the folding member 12 are joined (sealed), a portion not only for joining to the planar members 11 but also for joining the folding members 12 together may be provided.

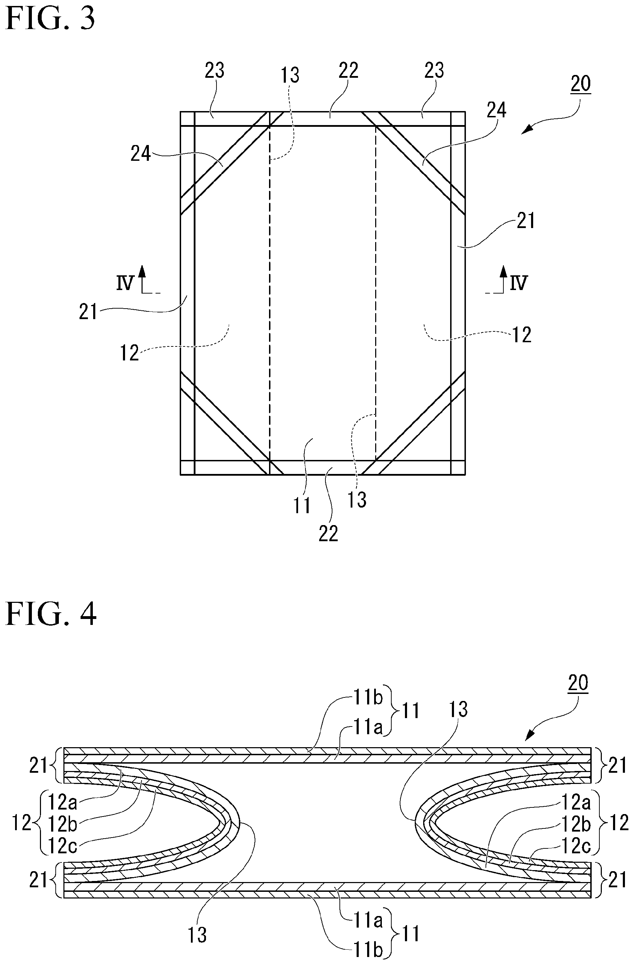

As an example in which the folding member 12 is disposed at facing two sides of the planar members 11, there is a package body 20 of a second embodiment shown in FIGS. 3 and 4. FIG. 3 shows an external appearance of the package body 20 of the second embodiment. Also, FIG. 4 is a cross-sectional view taken along line IV-IV in FIG. 3. The package body 20 includes a pair of planar members 11 facing each other in the front and rear (vertically in FIG. 4), and folding members 12 disposed on the left and right between the pair of planar members 11. The upper and lower planar members 11 and the left and right folding members 12 are joined together with longitudinal seal portions 21 interposed therebetween to form a cylindrical shape.

The planar member 11 and the folding member 12 of the package body 20 can be formed of the same laminated body as in the first embodiment. A laminated body forming the planar member 11 includes a sealant layer 11a and a base material layer 11b. A laminated body forming the folding member 12 includes an innermost sealant layer 12a, a base material layer 12b on an outer side thereof, and an outermost heat-resistant layer 12c. Although not shown, these laminated bodies may include an adhesive layer, a printed layer, and the like as described in the first embodiment.

In the package body 20 of the second embodiment, both upper and lower ends of the planar members 11 are each joined by a lateral seal portion 22 as shown in FIG. 3. A fold line 13 extending vertically is formed inward on the left and right folding members 12. Therefore, the package body 20 can be flattened when the folding member 12 is folded in half and inflated into a substantially rectangular parallelepiped shape when the folding member 12 is unfolded forward and rearward.

End seal portions 23 may be formed at both upper and lower end portions of the folding member 12 in a direction along the fold line 13. The end seal portions 23 can be each formed to extend to the left and right of the lateral seal portion 22. In at least one of the end seal portions 23, the heat-resistant layer 12c may be omitted and the base material layers 12b may be joined together. In this case, the end seal portion 23 can be formed not only by joining the front and rear planar members 11 and inner surfaces of the folding member 12, but also by joining (sealing) outer surfaces of the folding member 12 facing each other with the fold line 13 therebetween.

At four corners of the package body 20, an oblique seal portion 24 connecting the longitudinal seal portion 21 and the lateral seal portion 22 at an angle of approximately 45° may be provided. At least in a region in which the longitudinal seal portion 21 and the oblique seal portion 24 are formed, the folding member 12 preferably has the heat-resistant layer 12c formed on an outer surface of the folding member 12 to prevent adhesion (blocking) of the folding members 12 facing each other with the fold line 13 therebetween.

When the package body 20 has the oblique seal portion 24, contents do not reach a space between the oblique seal portion 24 and the end seal portion 23. Therefore, a triangular portion including the end seal portion 23 outside the oblique seal portion 24 can be excised. When the package body 20 does not have the oblique seal portions 24, the longitudinal seal portions 21 are in contact with the end seal portions 23 at the four corners of the planar member 11, and thereby a circumference of the package body 20 can be sealed.

A method of recycling after using the laminated body or the package body of the embodiment is not particularly limited, and can be appropriately selected according to a state at the time of collection or the like. In the laminated body of the embodiment, since a proportion of the polyethylene-based resin can be increased, both the chemical recycling and the mechanical recycling described above are possible. When the laminated body or the package body of the embodiment is recycled, it can also be recycled into products of the same type such as laminated bodies or package bodies. Materials obtained by recycling may be utilized in products such as paints, molded products, and hydrocarbon oils.

While the present invention has been described above with reference to preferred embodiments, the present invention is not limited to the above-described embodiments, and various modifications can be made within a range not departing from the gist of the present invention. Modifications include additions, substitutions, omissions, and other changes of constituent elements. Also, it is also possible to appropriately combine constituent elements used in different embodiments.

The laminated body of the embodiment is in a form of a laminated film mainly composed of a polyethylene-based resin, is not limited to applications of package bodies such as pouches, bags, and containers, and can be used for various applications. If the laminated body is a flexible laminated film, a package body for soft packaging can be formed. The package body may be formed of only the laminated body described above, or may be combined with attachment members such as labels, tags, straws, and outer boxes. From the perspective of recycling, the attachment members are preferably separable from the package body.

A heat-resistant layer similar to the heat-resistant layer 12c of the folding member 12 can also be laminated on an outer surface of the planar member 11. For example, a heat-resistant layer may be formed on an outer surface of the planar member 11 in a region corresponding to a portion in which the inner surface of the planar member 11 is joined prior to joining (sealing) of the planar member 11. Also, a heat-resistant layer may also be formed on an outer surface of the planar member 11 for the purpose of the marking described above, display, or the like. As the planar member 11, a laminated body in which the heat-resistant layer is formed over the entire surface can also be used.

### [Industrial Applicability]

According to the present invention, since joining (sealing) of the inner surfaces can be facilitated and adhesion (blocking) of the outer surfaces can be suppressed, the present invention can be industrially used.

### [Reference Signs List]

10, 20 package body
11 Planar member
11a, 12a Sealant layer
11b, 12b Base material layer
12 Folding member
12c Heat-resistant layer
13 Fold line
14 Barrel seal portion
15 Bottom seal portion
15a Side end portion
21 Longitudinal seal portion
22 Lateral seal portion
23 End seal portion
24 Oblique seal portion

## Claims

1. A laminated body comprising:
an innermost sealant layer formed of a polyethylene-based resin;
a base material layer formed of a polyethylene-based resin; and
an outermost heat-resistant layer formed on an outer surface of the base material layer.

2. The laminated body according to claim 1, wherein
the heat-resistant layer is formed of a varnish.

3. The laminated body according to claim 1 or 2, wherein
the sealant layer is formed of an unstretched polyethylene-based resin, and
the base material layer is formed of a stretched polyethylene-based resin.

4. The laminated body according to any one of claims 1 to 3, wherein
a printed layer or an adhesive layer is provided between the sealant layer and the base material layer.

5. The laminated body according to any one of claims 1 to 4, wherein
95% by weight or more of the laminated body is formed of a polyethylene-based resin.

6. A package body comprising a folding member folded such that outer surfaces thereof face each other along a fold line, wherein
at least the folding member is formed of the laminated body according to any one of claims 1 to 5.

7. The package body according to claim 6, wherein
one or more of the folding members are provided between a pair of flat planar members.

8. The package body according to claim 7, wherein
the planar members are laminated bodies, each including an innermost sealant layer formed of a polyethylene-based resin and an outermost base material layer formed of a polyethylene-based resin.

9. The package body according to claim 7 or 8, the package body having a bottom member folded in half along a fold line, the bottom member being sandwiched between a pair of barrel members, wherein
the bottom member is the folding member, and
the barrel members are the planar members.

10. The package body according to any one of claims 6 to 9, wherein
a heat-resistant layer is locally formed in a region of an outer surface of the folding member corresponding to a portion to which an inner surface of the folding member is joined.

11. The package body according to any one of claims 6 to 10, wherein
the heat-resistant layer is omitted and the base material layers are joined together at an end portion of the folding member in a direction along the fold line.
